# EUROPÄISCHE PATENTANMELDUNG

(11) **EP 2 003 006 A2**
(43) Veröffentlichungstag der Anmeldung: **17.12.2008**
(21) Anmeldenummer: 08010407.8
(22) Anmeldetag: 07.06.2008
(51) Int. Cl.: B60J 7/057

(54) **Anordnung einer Vorrichtung zum Detektieren eines Einklemmens**

(30) Priorität: 13.06.2007 DE 102007027242
(71) Anmelder: Wilhelm Karmann GmbH, 49084 Osnabrück (DE)
(72) Erfinder: Konerding, Swen, 49082 Osnabrück (DE); Gutendorf, Peter, 49088 Osnabrück (DE); Ellermann, Peter, 49163 Hunteburg (DE); Jahn, Jorg, 32257 Bünde (DE)

(57) **Zusammenfassung**

Es wird eine Anordnung einer Vorrichtung (9) zum Detektieren eines Einklemmens von Gegenständen oder Körperteilen mit einer kapazitiven Sensoreinrichtung (11) insbesondere im Bereich einer Dachspitze (17) eines motorisch antreibbaren Verdecks (1) eines Cabriolet-Fahrzeugs vorgeschlagen, wobei erfindungsgemäß vorgesehen ist, dass die kapazitive Sensoreinrichtung (11) mit wenigstens einem ein gerichtetes Feld (21) ausbildenden und an dem motorisch antreibbaren Verdeck (1) angeordneten kapazitiv messenden Sensor (15) ausgebildet ist, welcher mit einem Steuergerät (5) wirkverbunden ist, wobei die Anordnung des wenigstens einen Sensors (15) und die Ausrichtung des gerichteten Felds (21) des kapazitiv messenden Sensors (15) derart gewählt ist, dass bei einer Bewegung des Verdecks (1) kein Element des Verdecks (1) oder des Fahrzeugs in das gerichtete Feld (21) des kapazitiv messenden Sensors (15) eindringt.

## Beschreibung

Die Erfindung betrifft eine Anordnung zum Detektieren eines Einklemmens von Gegenständen oder Körperteilen mit einer kapazitiven Sensoreinrichtung insbesondere im Bereich einer Dachspitze eines motorisch antreibbaren Verdecks eines Cabriolet-Fahrzeugs nach der im Oberbegriff des Patentanspruches 1 näher definierten Art.

Aus der Praxis sind derartige Sensoreinrichtungen bekannt, welche im Bereich einer Dachspitze eines Verdecks eines Cabriolet-Fahrzeugs angeordnet sein können. Die kapazitive Sensoreinrichtung ist dabei derart mit einer Auswerteeinheit ausgebildet, mittels welcher erkannt werden kann, wenn ein Gegenstand oder ein Körperteil in ein von der Sensoreinrichtung erzeugtes Feld eingreift.

Nachteilhafterweise müssen derartigen Sensoreinrichtungen kurz vor einem Schließen des Verdecks ausgeschaltet werden, da die Sensoreinrichtung ansonsten ein Eindringen des Windschutzscheibenrahmens in das von der Sensoreinrichtung erzeugte Feld erkennen würde und die Verdeckbewegung unterbrechen würde. Allerdings ist genau dieser Bereich kurz vor dem Schließen des Verdecks zum Erkennen einer Einklemmsituation entscheidend, da die Gefahr eines Einklemmens von Gegenständen oder Körperteilen dort besonders groß ist.

Weiterhin ist es aus der Praxis bekannt, Sensoreinrichtungen an einem Verdeck eines Cabriolet-Fahrzeugs auszubilden, welche neben einer an der Dachspitze angeordneten Elektrode an dem Windschutzscheibenrahmen eine weitere Elektrode aufweisen. Die an dem Windschutzscheibenrahmen angeordnete Elektrode weist dabei ein derartiges Potential auf, dass der Windschutzscheibenrahmen von der Sensoreinrichtung im Bereich vor einem Schließen des Verdecks nicht erkannt wird und somit ein Eingreifen von Gegenständen oder Körperteilen auch in diesem Bereich detektiert werden kann.

Hierbei ist allerdings der konstruktive Aufbau durch die Verwendung durch zwei Elektroden an verschiedenen Bauteilen und eine dadurch notwendige Verkabelung nachteilhafterweise groß.

Es ist somit Aufgabe der vorliegenden Erfindung, eine Anordnung einer Vorrichtung zum Detektieren eines Einklemmens von Gegenständen oder Körperteilen mit einer kapazitiven Sensoreinrichtung der eingangs genannten Art zu schaffen, welche sich durch einen einfachen konstruktiven Aufbau auszeichnet und dabei eine Einklemmsituation während des gesamten Schließprozesses sicher erkennt.

Diese Aufgabe wird mit einer Anordnung einer Vorrichtung zum Detektieren eines Einklemmens von Gegenständen oder Körperteilen mit einer kapazitiven Sensoreinrichtung gemäß den Merkmalen des Patentanspruches 1 gelöst.

Es ist somit eine Anordnung einer Vorrichtung zum Detektieren eines Einklemmens von Gegenständen oder Körperteilen mit einer kapazitiven Sensoreinrichtung insbesondere im Bereich einer Dachspitze eines motorisch antreibbaren Verdecks eines Cabriolet-Fahrzeugs vorgesehen, wobei erfindungsgemäß vorgeschlagen wird, dass die kapazitive Sensoreinrichtung mit wenigstens einem ein gerichtetes Feld ausbildenden und an dem motorisch antreibbaren Verdeck angeordneten kapazitiv messenden Sensor ausgebildet ist, welcher mit einem Steuergerät wirkverbunden ist, wobei die Anordnung des wenigstens einen Sensors und die Ausrichtung des gerichteten Felds des kapazitiv messenden Sensors derart gewählt ist, dass bei einer Bewegung des Verdecks kein Element des Verdecks oder Fahrzeugs in das Feld des kapazitiv messenden Sensors eingreift.

Eine derartige Vorrichtung hat den Vorteil, dass die Sensoreinrichtung komplett auf einer Seite von zwei zueinander beweglichen Elementen angeordnet ist und somit der konstruktive Aufbau inklusive einer Verkabelung der Elemente der Vorrichtung sehr einfach realisierbar ist. Dies ist beispielsweise bei der Anordnung einer erfindungsgemäßen Sensoreinrichtung im Bereich einer Dachspitze eines motorisch antreibbaren, beispielsweise mittels einer Tipp-Bedienung betätigbaren Verdecks eines Cabriolet-Fahrzeugs der Fall.

Das von der Sensoreinrichtung erzeugte gerichtete Feld ist über eine entsprechende Anordnung der Elemente der Sensoreinrichtung derart scharf begrenzbar und ausrichtbar, dass die bei einem Schließvorgang des Verdecks der Sensoreinrichtung gegenüberliegenden Elemente des Verdecks bei einem Schließvorgang des Verdecks nicht in das von der Sensoreinrichtung erzeugte Feld eingreifen, aber Gegenstände oder Körperteile während der gesamten Verdeckbewegung erkannt werden. Die Wahrscheinlichkeit einer ungewollten Fehlauslösung der Vorrichtung gegenüber herkömmlich ausgebildeten Vorrichtungen kann hierdurch vorteilhafterweise stark reduziert werden.

Vorteilhafterweise kann bei einer erfindungsgemäßen Vorrichtung ausgewählt werden, ob die Sensoreinrichtung im Bereich der Dachspitze oder im Bereich eines Windschutzscheibenrahmens oder an anderen Stellen des Verdecks oder der Fahrzeugkarosserie oder am Verdeckkastendeckeln angeordnet wird.

In einer vorteilhaften Ausbildung einer erfindungsgemäßen Anordnung einer Vorrichtung ist es vorgesehen, dass der wenigstens eine kapazitiv messende Sensor mit einer ersten Elektrode, einer zweiten Elektrode und einer wenigstens teilweise zwischen der ersten Elektrode und der zweiten Elektrode angeordneten Zwischenelektrode ausgebildet ist.

Die Elektroden können dabei derart geformt und zueinander angeordnet werden, dass ein von der Sensoreinrichtung erzeugtes Feld eine für den jeweiligen Anwendungsfall gewünschte Form ausbildet, so dass das Feld der Kontur der gegenüberliegenden Elemente angepasst werden kann und Problemstellen, wie z. B. eine Verschlusseinrichtung des Verdecks, von dem Feld nicht als Eingriff während der gesamten Verdeckschließbewegung erfasst werden.

Der kapazitiv messende Sensor kann dabei an vielfältigen Positionen angeordnet werden, wobei insbesondere eine Anordnung unterhalb eines in Fahrzeugfrontrichtung weisenden Bereichs einer Dachspitzenverkleidung der Dachspitze vorteilhaft ist. In einer alternativen Ausbildung der Erfindung ist es auch denkbar, den kapazitiv messenden Sensor in Dichtungen zu integrieren.

In einer einfachen Ausbildung der Erfindung ist es vorgesehen, dass der kapazitiv messende Sensor in Form einer Einklemmschutzleiste ausgebildet ist, welche sich in einer vorteilhaften Weiterbildung der Erfindung zur Erkennung einer Einklemmsituation in einem sehr großen Bereich wenigstens annähernd über die gesamte Fahrzeugbreite erstreckt. Der kapazitiv messende Sensor kann bei entsprechenden Rahmenbedingungen auch als Draht ausgebildet werden.

Um eine Verdeckbewegung bei einer erkannten Einklemmsituation zu unterbrechen, ist eine Auswerteeinheit der Sensoreinrichtung mit dem Steuergerät verbunden, wobei die Auswerteeinheit auch im Steuergerät integriert sein kann und meldet dem Steuergerät eine erkannte Einklemmsituation, so dass das Steuergerät in diesem Fall eine Verdeckbewegung unterbrechen kann und somit eine Verletzung oder ein Schaden an dem sich in dem Feld befindlichen Gegenstand oder Körperteil vorteilhafterweise verhindert werden kann.

Weitere Vorteile und vorteilhafte Ausführungen einer Anordnung einer Vorrichtung zum Detektieren eines Einklemmens von Gegenständen oder Körperteilen mit einer kapazitiven Sensoreinrichtung nach der Erfindung ergeben sich aus den Patentansprüchen, der Zeichnung und der Beschreibung.

Nachfolgend ist ein erfindungsgemäßes Verdeck eines Cabriolet-Fahrzeugs anhand der Zeichnung prinzipmäßig beschrieben.

Es zeigt:
- Fig. 1: eine schematisierte Ansicht eines Verdecks eines Cabriolet-Fahrzeugs in Alleinstellung;
- Fig. 2: eine vereinfachte dreidimensionale Ansicht eines Ausschnitts des Cabriolet-Fahrzeugs, wobei im Bereich einer Dachspitze des Verdecks eine Vorrichtung zum Detektieren eines Einklemmens von Gegenständen oder Körperteilen mit einer kapazitiven Sensoreinrichtung angeordnet ist;
- Fig. 3: eine vereinfachte dreidimensionale Ansicht des Ausschnitts des Cabriolet-Fahrzeugs der Fig. 2, wobei insbesondere ein von der Sensoreinrichtung erzeugtes gerichtetes Feld ersichtlich ist;
- Fig. 4: eine vereinfachte dreidimensionale Ansicht des Ausschnitts des Cabrioletfahrzeugs der Fig. 3 aus einer anderen Perspektive;
- Fig. 5: eine vereinfachte dreidimensionale Ansicht des Ausschnitts des Cabriolet-Fahrzeugs der Fig. 4, wobei das Verdeck weiter in Richtung einer Schließposition bewegt ist;
- Fig. 6: eine vereinfachte dreidimensionale Ansicht des Ausschnitts des Cabriolet-Fahrzeugs der Fig. 4 und Fig. 5, wobei das Verdeck in einer Schließposition dargestellt ist; und
- Fig. 7: eine stark vereinfachte Prinzipdarstellung des physikalischen Prinzips der eirifindungsgemäßen Sensoreinrichtung.

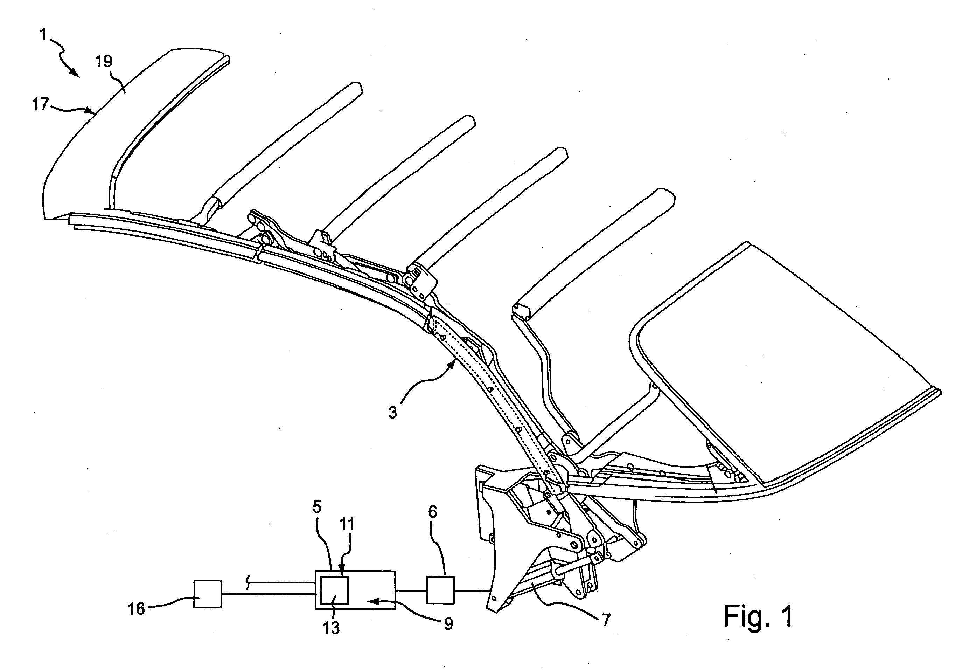

In Fig. 1 ist ein fahrbares Verdeck 1 eines Cabriolet-Fahrzeugs dargestellt, wobei das Verdeck 1 einen Verdeckmechanismus 3 umfasst. Das Verdeck 1 kann mittels eines als Verdecksteuergerät 5 ausgebildeten Steuergeräts und eines hiervon über eine Hydraulikanlage 6, welche in üblicher Weise mit einer Pumpe und ggf. mit einem Ventilblock ausgebildet ist, ansteuerbaren elektro-hydraulischen Verdeckantriebs 7 zwischen einer geöffneten und einer an einem Windschutzscheibenrahmen 8 angeordneten geschlossenen Stellung bewegt werden.

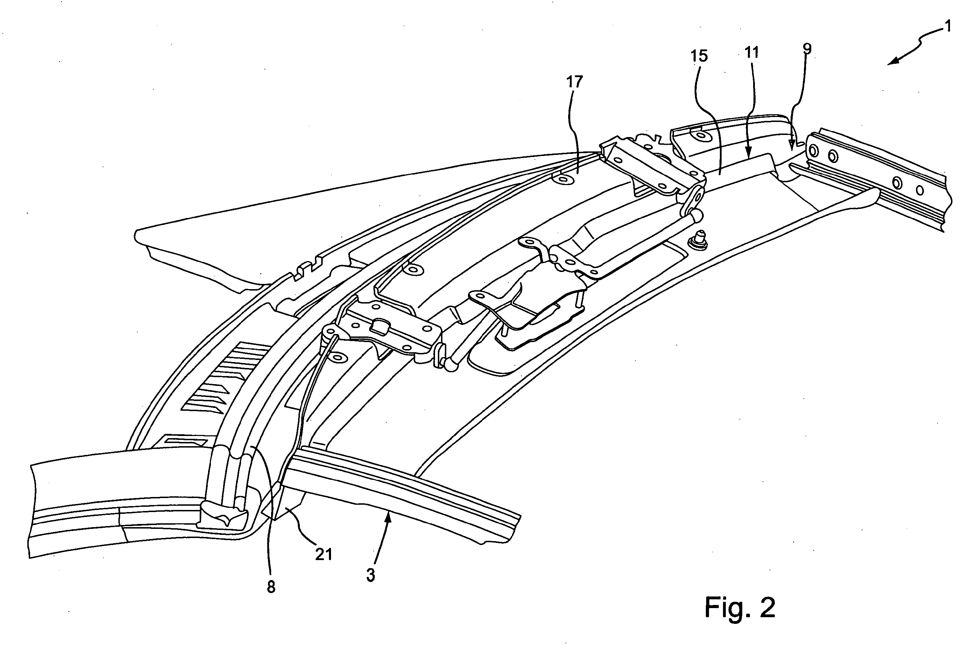

Um die automatische Verdeckbewegung ohne Beteiligung eines Kraftfahrzeugbenutzers und ohne dessen Beobachtung sicher durchführen zu können, ist eine Vorrichtung 9 zum Detektieren eines Eingriffs von Gegenständen oder Körperteilen in einen im Bereich einer Dachspitze 17 befindlichen Bewegungsraum des Verdeckmechanismus mit einer in der Fig. 2 ersichtlichen Sensoreinrichtung 11 vorgesehen, welche mit einem kapazitiv messenden Sensor 15 und einer Auswerteeinheit 13 ausgebildet ist. Die Auswerteeinheit 13 der Sensoreinrichtung 11 ist dabei vorliegend baulich in das Verdecksteuergerät 5 integriert.

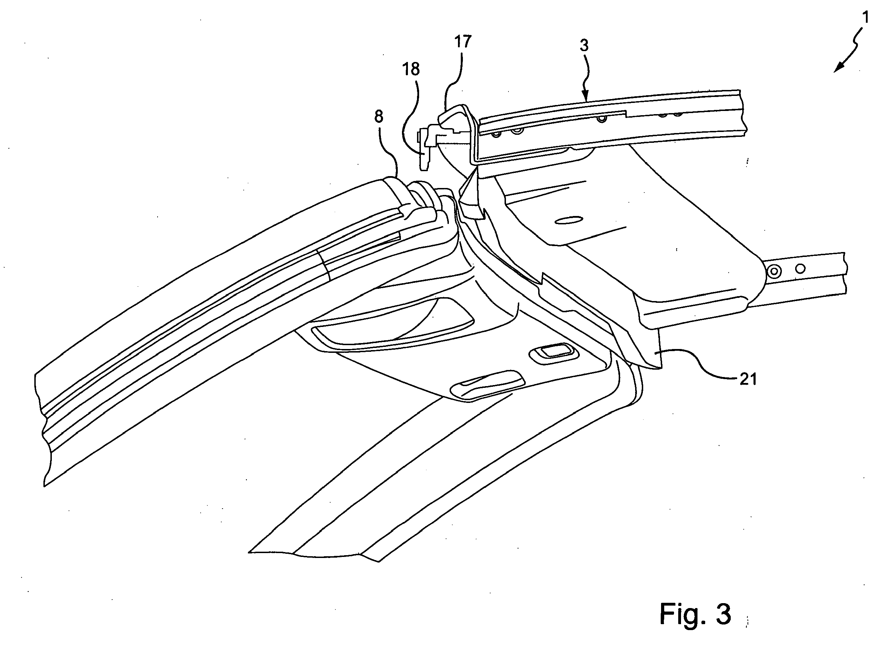

Weiterhin ist eine nur symbolisch dargestellte optische Sensorik 16 neben der kapazitiven Sensoreinrichtung 11 vorgesehen, welche beispielsweise zur Überwachung eines Einklemmens im Bereich eines beispielsweise in der Fig. 3 ersichtlichen Verdeckverschlusses 18 ausgebildet ist.

Der in der Fig. 2 ersichtliche kapazitiv messende Sensor 15 der Sensoreinrichtung 11 ist in der Form einer Einklemmschutzleiste ausgebildet und unterhalb eines in Fahrzeugfrontrichtung weisenden Bereichs einer die Dachspitze 17 verkleidenden, in der Fig. 1 ersichtlichen, Dachspitzenverkleidung 19 angeordnet.

Der kapazitiv messende Sensor 15 erstreckt sich dabei über die gesamte Fahrzeugbreite und erzeugt ein sich keilförmig, wenigstens annähernd in Richtung eines Fahrzeugbodens erstreckendes gerichtetes Feld 21. Ein in das gerichtete Feld 21 eingreifender Gegenstand oder Körperteil kann somit über der gesamten Fahrzeugbreite detektiert werden. Vorteilhafterweise sind hierzu an dem der Sensoreinrichtung 11 gegenüberliegenden Windschutzscheibenrahmen 8 keine Maßnahmen erforderlich.

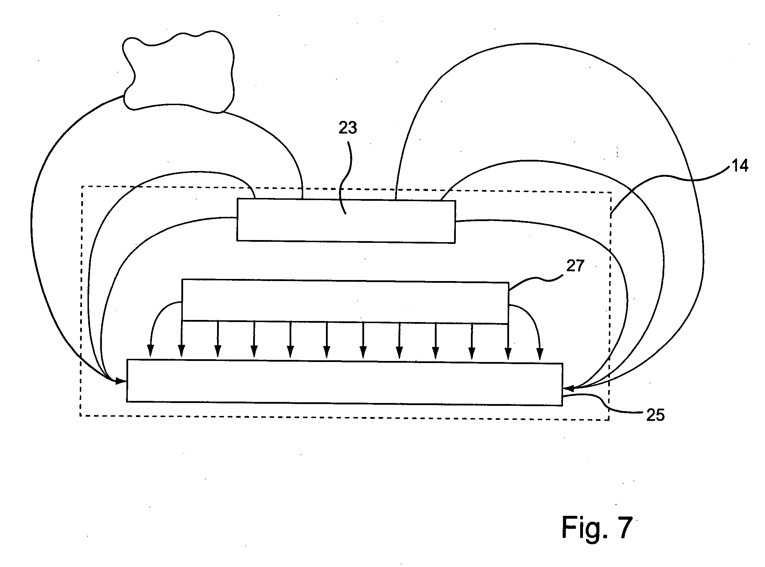

In Fig. 7 ist ein prinzipieller Aufbau des kapazitiven Sensors 15 dargestellt. Der Sensor 15 weist dabei eine erste Elektrode 23 und eine zweite Elektrode 25 auf, wobei die zweite Elektrode 25 ein von der ersten Elektrode 23 unterschiedliches Potential aufweist, so dass zwischen der ersten Elektrode 23 und der zweiten Elektrode 25 ein Feld entsteht.

Zwischen der ersten Elektrode 23 und der zweiten Elektrode 25 ist eine Zwischenelektrode 27 angeordnet, welche ein mit der ersten Elektrode 23 übereinstimmendes Potential aufweist, so dass sich zwischen der ersten Elektrode 23 und der Zwischenelektrode 27 keine Feldlinien ausbilden. Die Feldlinien zwischen der ersten Elektrode 23 und der zweiten Elektrode 25 können sich somit im Raum ausbreiten und der Bereich der Feldlinien wird vergrößert, so dass eine große Sensorreichweite erzielt wird.

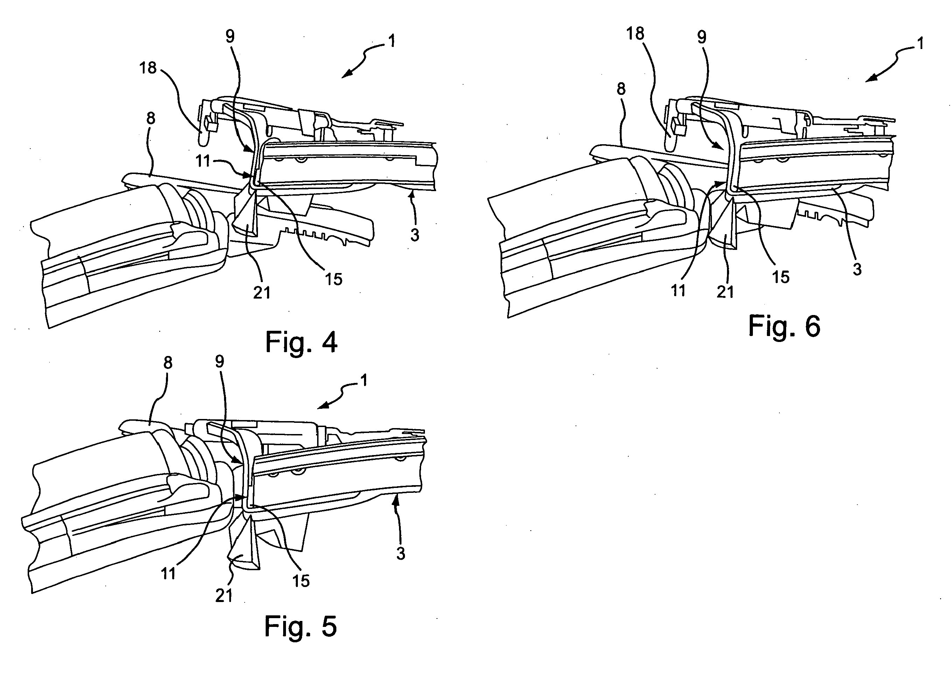

Durch eine entsprechende Formgebung der ersten Elektrode 23, der zweiten Elektrode 25 und der Zwischenelektrode 27 und eine geeignet gewählte Anordnung der Elektroden 23, 25 und 27 zueinander, kann dabei das in den Fig. 2 bis Fig. 6 ersichtliche gerichtete Feld 21 ausgebildet werden.

Wenn ein Gegenstand oder ein Körperteil in das gerichtete Feld 21 eingreift, wird ein sich im Bereich der Feldlinien des gerichteten Feldes 21 befindliches Dielektrikum des kapazitiv messenden Sensors 15 verändert, wobei diese Änderung des Dielektrikums durch die Auswerteeinheit 13 in herkömmlich bekannter Weise detektiert werden kann. Durch eine entsprechende Informationsübermittlung einer Detektion eines Eingriffs in das gerichtete Feld 21 von der Auswerteeinheit 13 an das Verdecksteuergerät 5 wird daraufhin die Verdeckbewegung unterbrochen und ein Schaden oder eine Verletzung des in das gerichtete Feld 21 eingreifenden Gegenstands oder Körperteils kann verhindert werden.

Das gerichtete Feld 21 ist gemäß den Fig. 3 bis Fig. 5 derart ausgebildet, dass weder der Windschutzscheibenrahmen 8 noch ein weiteres Element des Cabriolet-Fahrzeugs, wie beispielsweise der Verdeckverschluss 18, während des gesamten Schließvorgangs des Verdecks 1 in das gerichtete Feld 21 eingreift. Somit kann vorteilhafterweise während des gesamten Schließvorgangs des Verdecks 1 ein Einklemmen von Gegenständen oder Körperteilen zwischen der Dachspitze 17 und dem Windschutzscheibenrahmen 8 über der gesamten Fahrzeugbreite detektiert werden.

## Patentansprüche

1. Anordnung einer Vorrichtung (9) zum Detektieren eines Einklemmens von Gegenständen oder Körperteilen mit einer kapazitiven Sensoreinrichtung (11) insbesondere im Bereich einer Dachspitze (17) eines motorisch antreibbaren Verdecks (1) eines Cabriolet-Fahrzeugs,
**dadurch gekennzeichnet,**
**dass** die kapazitive Sensoreinrichtung (11) mit wenigstens einem ein gerichtetes Feld (21) ausbildenden und an dem motorisch antreibbaren Verdeck (1) angeordneten kapazitiv messenden Sensor (15) ausgebildet ist, welcher mit einem Steuergerät (5) wirkverbunden ist, wobei die Anordnung des wenigstens einen Sensors (15) und die Ausrichtung des gerichteten Felds (21) des kapazitiv messenden Sensors (15) derart gewählt ist, dass bei einer Bewegung des Verdecks (1) kein Element des Verdecks (1) oder Fahrzeugs in das gerichtete Feld (21) des kapazitiv messenden Sensors (15) eindringt.

2. Anordnung einer Vorrichtung nach Anspruch 1,
**dadurch gekennzeichnet,**
**dass** der wenigstens eine kapazitiv messende Sensor (15) mit einer ersten Elektrode (23), einer zweiten Elektrode (25) und einer wenigstens teilweise zwischen der ersten Elektrode (23) und der zweiten Elektrode (25) angeordneten Zwischenelektrode (27) ausgebildet ist.

3. Anordnung einer Vorrichtung nach einem der Ansprüche 1 oder 2,
**dadurch gekennzeichnet,**
**dass** der wenigstens eine kapazitiv messende Sensor (15) unterhalb eines in Fahrzeugfrontrichtung Bereichs einer Dachspitzenverkleidung (19) der Dachspitze (17) angeordnet ist.

4. Anordnung einer Vorrichtung nach einem der Ansprüche 1 bis 3,
**dadurch gekennzeichnet,**
**dass** der kapazitiv messende Sensor (15) in der Form einer Einklemmschutzleiste ausgebildet ist.

5. Anordnung einer Vorrichtung nach Anspruch 4,
**dadurch gekennzeichnet,**
**dass** die Einklemmschutzleiste (15) sich wenigstens annähernd über die gesamte Fahrzeugbreite erstreckt.

6. Anordnung einer Vorrichtung nach einem der Ansprüche 1 bis 5,
**dadurch gekennzeichnet,**
**dass** eine Auswerteeinheit (13) der Sensoreinrichtung (11) mit dem Steuergerät (5) verbunden ist, wobei das Steuergerät (5) eine Verdeckbewegung bei einer erkannten Einklemmsituation unterbricht.
